# FASCICULE DE BREVET EUROPEEN

(11) **EP 3 129 771 B1**
(45) Date de publication et mention de la délivrance du brevet: **11.09.2019**
(21) Numéro de dépôt: 15720357.1
(22) Date de dépôt: 07.04.2015
(51) Int. Cl.: G01N 23/046

(54) **DISPOSITIF DE MESURE POUR LA CORRECTION DE DEPLACEMENTS PARASITES DANS UN TOMOGRAPHE A RAYONS X**
MESSVORRICHTUNG ZUR KORREKTUR VON PARASITÄREN BEWEGUNGEN IN EINEM RÖNTGENSTRAHLTOMOGRAPHEN
MEASUREMENT DEVICE FOR CORRECTING PARASITIC MOVEMENTS IN AN X-RAY TOMOGRAPH

(30) Priorité: 08.04.2014 FR 1453091
(43) Date de publication de la demande: 15.02.2017
(73) Titulaire: Université Grenoble Alpes, 38400 Saint-Martin-d'Hères (FR)
(72) Inventeur: SALAGER, Simon, 38100 Grenoble (FR); ANDO, Edward Carlo Giorgio, 38000 Grenoble (FR); DESRUES, Jacques, 38660 Saint Pancrasse (FR)
(74) Mandataire: Cabinet Chaillot
(86) Numéro de dépôt international: PCT/FR2015/050902
(87) Numéro de publication internationale: WO 2015/155466

(56) Documents cités:
- EP-A1- 2 554 119
- EP-A2- 1 400 783
- WO-A1-2005/119174
- DE-A1-102010 050 949
- US-A- 4 962 591
- US-A1- 2003 043 962
- US-A1- 2004 252 811
- US-A1- 2007 114 428
- US-A1- 2007 122 020
- US-A1- 2013 195 239

## Description

La présente demande de brevet revendique la priorité de la demande de brevet français FR14/530 91.

### Domaine

La présente demande concerne le domaine des appareils de tomographie à rayons X.

### Exposé de l'art antérieur

La tomographie à rayons X consiste à reconstruire une image tridimensionnelle d'un échantillon à partir de radiographies de celui-ci. De nombreuses radiographies de l'échantillon sont réalisées, chacune sous un angle de vue différent. Un traitement informatique de ces radiographies permet alors de construire une image tridimensionnelle de la structure de l'échantillon.

On considère ici le cas dans lequel le tomographe à rayons X comprend une source fixe émettant un faisceau de rayons X vers un écran détecteur fixe, ce faisceau passant par l'échantillon à analyser. L'échantillon est monté sur une platine qui est entraînée en rotation entre chaque prise de vue.

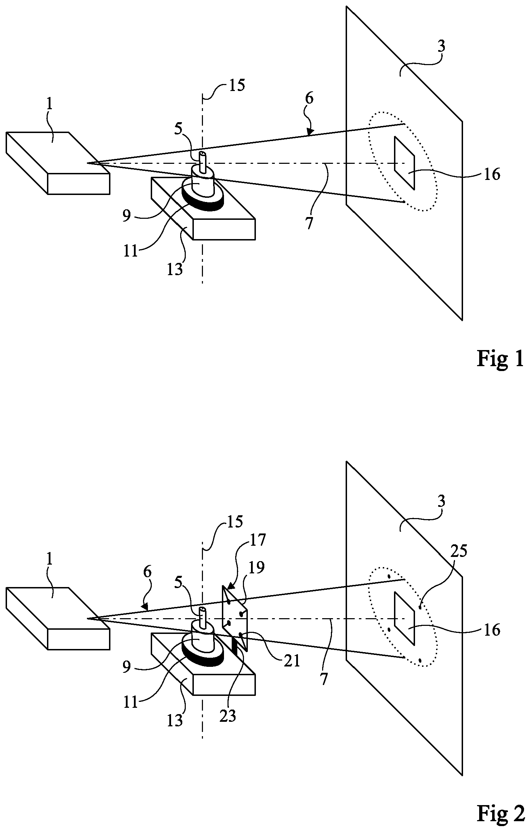

La figure 1 représente schématiquement et en perspective un exemple de tomographe à rayons X. Le tomographe comprend une source de rayons X 1 et un écran détecteur 3 constitué d'une matrice de pixels sensible aux rayons X. Un échantillon 5 à analyser est disposé entre la source et le détecteur de façon à être complètement irradié par un faisceau de rayons X 6 émis par la source, c'est-à-dire de façon à être dans le champ de mesure du tomographe. La source 1, l'échantillon 5 et le détecteur 3 sont alignés selon un axe 7. L'échantillon repose sur un porte-échantillon 9, lui-même disposé au centre d'une platine tournante 11 montée sur un support fixe 13. La platine 11, le porte-échantillon 9 et l'échantillon 5 sont centrés sur un même axe 15 orthogonal à l'axe 7, l'axe 15 étant l'axe de rotation de la platine 11.

En fonctionnement, la source 1 émet un faisceau de rayons X d'axe 7. Le faisceau de rayons X traverse l'échantillon 5 avant d'atteindre le détecteur photosensible 3 qui acquiert alors une radiographie comprenant une image 16 de l'échantillon. Entre deux prises de vue successives une rotation d'axe 15 est appliquée à la platine 11 afin de modifier l'angle d'acquisition de la radiographie. Un nombre important de radiographies, couramment plus de 1000, est ainsi acquis jusqu'à ce que l'échantillon ait effectué un tour complet sur lui-même. La construction de l'image tridimensionnelle de l'échantillon est ensuite effectuée par un traitement informatique.

En pratique, la durée d'acquisition de l'ensemble des radiographies de l'échantillon est importante, de l'ordre de quelques heures. Durant ce laps de temps, l'échantillon peut subir des déplacements parasites entraînant des déplacements, des agrandissements, des rétrécissements et autres déformations de son image dans des radiographies successives. Ces déplacements parasites peuvent résulter de variations de température de l'environnement dans lequel est disposé le tomographe. Lors du traitement informatique des radiographies de l'échantillon, les déformations résultant de déplacements parasites ne sont pas prises en compte et la qualité de l'image tridimensionnelle s'en trouve affectée.

Entre les première et dernière prises de vue, l'échantillon effectue un tour complet sur lui-même. La dernière prise de vue devrait donc donner une image identique à la première. La différence entre ces deux images caractérise un déplacement parasite de l'échantillon entre les prises de vue correspondantes. Pour améliorer la qualité de l'image construite, on a considéré que les déplacements parasites de l'échantillon sont linéaires et on corrige chaque radiographie d'un incrément correspondant. La construction de l'image tridimensionnelle est ensuite effectuée en tenant compte de cette correction.

Cette méthode de correction ne produit au mieux qu'une amélioration minime de la qualité de l'image tridimensionnelle fournie par le tomographe, ce qui montre que l'approximation linéaire des déplacements parasites est incorrecte.

La demande de brevet WO2005/119174 et la demande de brevet américain US2003/0043962 décrivent diverses dispositions d'appareil de tomographie. Les demandes de brevet EP1400783 et US 4962591 décrivent des appareils pour mesurer la position ou calibrer une machine de mesure de la position d'un échantillon.

Il existe donc un besoin, dans un tomographe à rayons X, d'un dispositif de mesure et de correction précise des déplacements parasites de l'échantillon au cours d'une analyse.

### Résumé

L'invention est exposée dans la revendication 1. Les revendication dépendantes exposent des modes de réalisation supplémentaires.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1, décrite précédemment, est une vue schématique en perspective d'un exemple de tomographe à rayons X ;
la figure 2 est une vue schématique en perspective d'un mode de réalisation d'un tomographe adapté à la mesure de déplacements parasites d'un échantillon ;
la figure 3A est une vue schématique d'un mode de réalisation d'une mire du tomographe de la figure 2 ;
la figure 3B est une vue éclatée en perspective représentant schématiquement une partie de la mire de la figure 3A ;
la figure 4A est une vue schématique d'une variante de réalisation d'un bras de fixation de la mire ;
la figure 4B est une vue en perspective et en coupe d'une portion du bras ; et
chacune des figures 5A, 5B, 6, 7, 8A et 8B représente schématiquement deux radiographies superposées de la mire.

Par souci de clarté, de mêmes éléments ont été désignés par de mêmes références aux différentes figures et les diverses figures ne sont pas tracées à l'échelle.

### Description détaillée

Dans un tomographe tel que celui représenté en figure 1, les inventeurs ont montré que les déplacements parasites d'un échantillon sont principalement liés à des mouvements parasites du support 13 et que les déplacements parasites de l'échantillon 5 par rapport au porte-échantillon 9, à la platine 11 et au support 13 sont négligeables. Les inventeurs ont aussi montré que les mouvements parasites du support, et donc de l'échantillon, résultent le plus souvent de variations de la température de la pièce dans laquelle le tomographe est disposé.

La figure 2 représente schématiquement et en perspective un mode de réalisation d'un tomographe adapté à la mesure de déplacements parasites d'un échantillon. Ce tomographe comprend de mêmes éléments que ceux décrits en relation avec la figure 1 désignés par les mêmes références. Le tomographe comprend en outre un élément de repérage, ou mire, 17. La mire 17 comprend un cadre rectangulaire 19 portant des billes 21 opaques aux rayons X au voisinage de chacun de ses coins. La mire 17 est fixée au support 13 par l'intermédiaire d'un bras 23 fixé au cadre 19 de façon que, en fonctionnement, les billes soient sur le trajet du faisceau de rayons X 6. On obtient alors sur l'écran détecteur 3 des radiographies comprenant une image 16 de l'échantillon et des images 25 des billes 21 autour de l'image de l'échantillon.

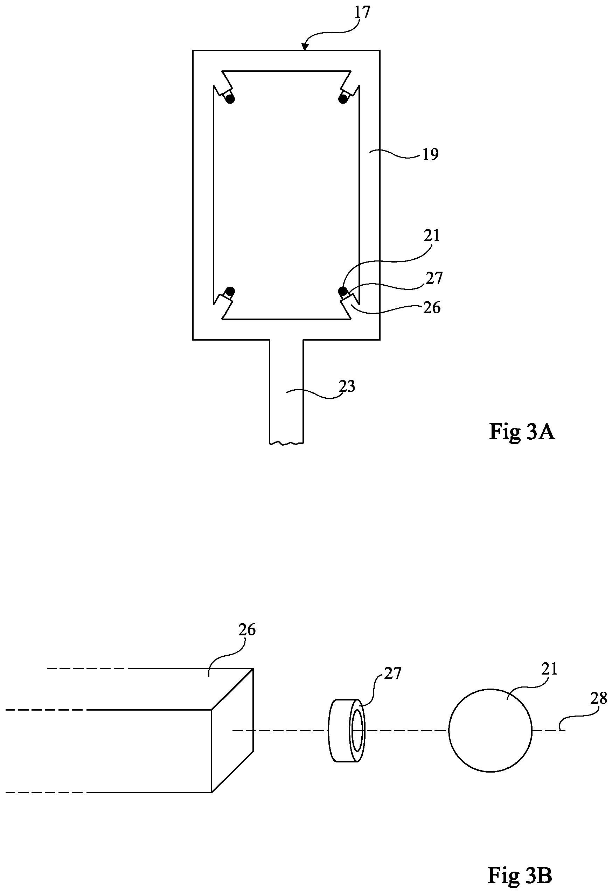

Les figures 3A et 3B sont respectivement une vue de face schématique d'un mode de réalisation de la mire 17 représentée en figure 2 et une vue éclatée en perspective d'une partie de cette mire 17. La mire 17 comprend un cadre rectangulaire 19 et quatre tiges 26, chaque tige étant solidaire de l'un des coins du cadre et étant dirigée vers l'intérieur du cadre. Une bille 21 en un matériau opaque aux rayons X, par exemple en acier, est fixée à l'extrémité de chaque tige 26 par l'intermédiaire d'une bague 27. La mire comprend également un bras 23, par exemple un barreau, solidaire de la partie médiane de l'un des montants du cadre pour monter la mire 17 sur un support, le bras 23 étant parallèle à l'axe 15. La figure 3B représente plus en détail un ensemble d'une tige 26, d'une bague 27 et d'une bille 21. La tige 26, la bague 27 et la bille 21 sont alignées selon un axe 28, la bague 27 ceinturant en partie la bille 21 pour la maintenir en place.

Le bras 23, les tiges 26 et le cadre 19 sont en un matériau dont le coefficient de dilatation thermique est faible, par exemple en Invar. Les bagues 27 sont en un matériau, par exemple de l'aluminium, dont le coefficient de dilatation thermique est plus élevé que celui du matériau des tiges 26, du bras 23 et du cadre 19.

On considère que le bras 23 de la mire 17 est fixé au support 13 comme cela a été décrit en relation avec la figure 2. Si la température augmente, les matériaux de la mire 17 se dilatent.

Si on considère les deux billes supérieures, la dilatation du bras 23 a tendance à les déplacer vers le haut, c'est-à-dire à les déplacer selon l'axe 15 en les éloignant du support. La dilatation du cadre 19 a tendance à les déplacer vers le haut et à les éloigner les unes des autres. La dilatation des tiges et des bagues a tendance à les déplacer vers le bas et à les rapprocher les unes des autres. Les matériaux, les dimensions et le montage des éléments de la mire 17 associés à ces billes supérieures sont choisis pour que les déplacements des billes supérieures liés aux dilatations se compensent. Les positions des billes 21 supérieures par rapport au support 13 sont alors insensibles à une augmentation, et plus généralement à une variation, de température.

Si on considère les billes inférieures, en choisissant le même mode de montage que pour les billes supérieures, on comprendra que la compensation des déplacements des billes inférieures liés aux dilatations est incorrecte, du moins en ce qui concerne le déplacement vertical. Les positions des billes 21 inférieures par rapport au support 13 restent néanmoins quasi-insensibles à une variation de température.

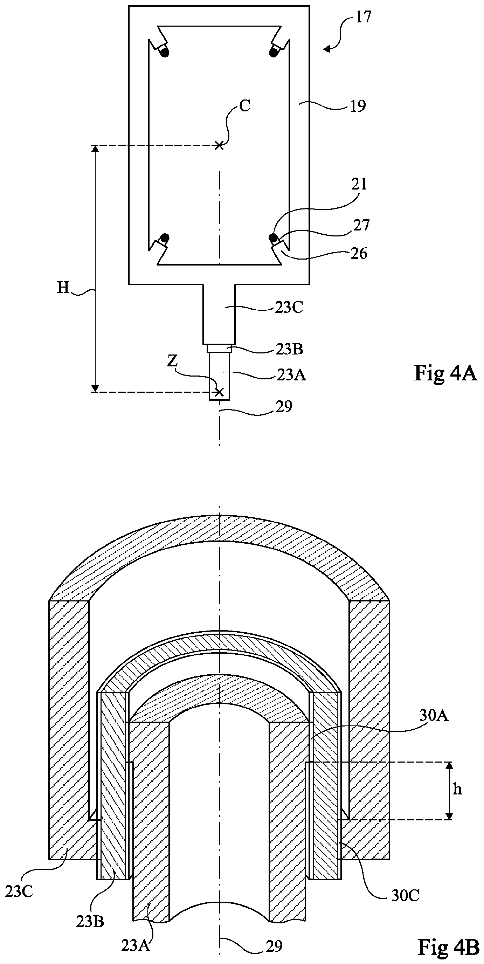

Les figures 4A et 4B représentent schématiquement une variante de réalisation de la mire 17 permettant d'assurer une invariance de position en fonction de la température tant des billes supérieures que des billes inférieures. La figure 4A est une vue de face représentant la mire 17 et le bras 23, la figure 4B étant une vue en perspective et en coupe d'une portion centrale du bras 23.

La mire 17 comprend de mêmes éléments qu'en figures 3A et 3B à savoir un cadre rectangulaire 19 et, monté dans chaque coin du cadre, un ensemble d'une tige 26, d'une bague 27 et d'une bille 21, les tiges étant orientées vers le centre C du cadre. Dans cette variante, le bras 23 comprend un tube inférieur 23A vissé dans un tube intermédiaire 23B lui-même vissé dans un tube supérieur 23C, les tubes 23A, 23B et 23C étant alignés selon un même axe 29 parallèle à l'axe 15. Une extrémité du tube supérieur 23C est fixée au montant inférieur de la mire 17. Le tube inférieur 23A est fixé au support 13 (non représenté) en un point Z, les points Z et C étant séparés d'une distance H selon l'axe 29.

La paroi extérieure du tube inférieur 23A comprend une partie filetée 30A disposée à l'extrémité du tube 23A du côté opposé au point de fixation Z. De manière similaire, la paroi intérieure du tube supérieur 23C comprend une partie filetée 30C disposée à l'extrémité du tube 23C du côté opposé au montant inférieur de la mire. Les parois extérieure et intérieure du tube intermédiaire 23B sont filetées. Le diamètre et l'épaisseur de chacun des tubes 23A, 23B et 23C sont choisis de sorte que la partie filetée 30A soit liée à la paroi filetée intérieure du tube intermédiaire 23B et que la partie filetée 30C soit liée à la paroi filetée extérieure du tube intermédiaire 23B. Les parties filetées 30A et 30C sont séparées d'une distance h selon l'axe 29, la partie filetée 30A du tube inférieur 23A étant plus proche de la mire que la partie filetée 30C du tube supérieur 23C.

Le tube intermédiaire 23B est en un matériau, par exemple de l'aluminium, dont le coefficient de dilatation thermique est plus élevé que celui du matériau, par exemple de l'Invar, du cadre 19 et des tubes supérieur et inférieur.

Si la température augmente, les matériaux de la mire 17 et du bras 23 se dilatent. La dilatation du cadre 19 et des tubes 23A et 23C a tendance à augmenter la distance H entre le point de fixation Z et le centre C du cadre. La dilatation du tube intermédiaire 23B a tendance à augmenter la distance h entre les parties filetées 30A et 30C ce qui entraîne un raccourcissement du bras 23. En choisissant h = (K1/K2)^{∗}H, où K1 est le coefficient de dilatation du matériau du tube 23B et K2 est le coefficient de dilatation du matériau du cadre 19 et des tubes 23A et 23C, l'augmentation de la distance H est complètement compensée par le raccourcissement du bras 23. La position du point C par rapport au point Z, et donc par rapport au support 13, est alors invariante en température.

La longueur totale du bras 23 peut être adaptée aux dimensions de l'échantillon 5 et du porte-échantillon 9, par exemple en modifiant la position du point auquel le tube inférieur 23A du bras 23 est fixé au support 13, ce qui modifie la distance H. Les dilations thermiques du bras seront compensées en ajustant la distance h par vissage ou dévissage des tubes 23A et 23C sur le tube 23C.

Les dimensions, les matériaux et le montage des tiges 26 et des bagues 27 sont choisis pour que la dilatation du cadre 19 qui a tendance à éloigner les billes les unes des autres soit complètement compensée par la dilatation des tiges et des bagues. Les positions des billes par rapport au point C, et donc par rapport au support 13, sont alors invariantes en température. Entre l'acquisition de deux radiographies différentes, des variations de température entraînent des dilatations ou des contractions des matériaux du tomographe qui provoquent des déplacements parasites du support 13 et donc de l'échantillon 5. La mire 17 étant solidaire du support 13 et les positions des billes 21 par rapport au support étant insensibles aux variations de température, le déplacement de chaque bille par rapport à la source 1 et au détecteur 3 est uniquement lié au déplacement parasite du support et donc de l'échantillon 5. Les déplacements des billes par rapport à la source et au détecteur provoquent des décalages des positions des images des billes dans les radiographies acquises, ces décalages étant uniquement liés au déplacement parasite du support et donc de l'échantillon. Les déplacements parasites de l'échantillon entre deux prises de vue sont déterminés à partir de la mesure des décalages des positions des images des billes dans les radiographies correspondant à ces prises de vue.

Pour mesurer avec précision le décalage de la position de l'image d'une même bille dans deux radiographies différentes, on mesure le décalage du centre de cette image. L'image d'une bille dans une radiographie étant un disque, le centre de l'image est facilement identifiable et le décalage est mesuré avec précision. Ainsi, le déplacement parasite correspondant à ce décalage est déterminé de façon précise.

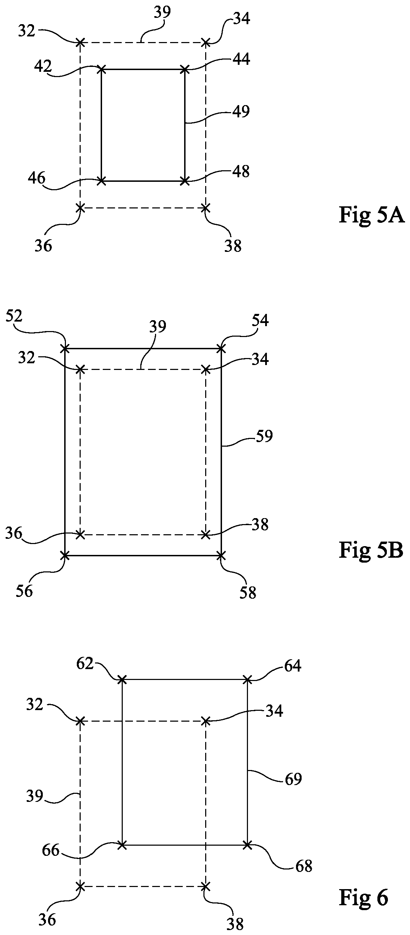

Chacune des figures 5A, 5B, 6, 7, 8A et 8B représente schématiquement des positions des images des billes sur le détecteur 3 dans des première et deuxième radiographies. Dans chacune de ces figures, des points 32, 34, 36 et 38 correspondent aux positions des images des billes dans la première radiographie, ces positions définissant un rectangle 39.

En figure 5A, entre deux prises de vue, l'ensemble de la mire et du support a été translaté selon l'axe 7 en direction du détecteur 3. Les images des billes aux positions 32, 34, 36 et 38 dans la première radiographie sont décalées respectivement vers des positions 42, 44, 46 et 48 dans la radiographie courante. Les positions 42, 44, 46 et 48 définissent un rectangle 49 plus petit que le rectangle 39.

En figure 5B, entre deux prises de vue, l'ensemble de la mire et du support a été translaté selon l'axe 7 en direction de la source 1. Les images de billes aux positions 32, 34, 36 et 38 dans la première radiographie sont décalées respectivement vers des positions 52, 54, 56 et 58 dans la radiographie courante. Les positions 52, 54, 56 et 58 définissent un rectangle 59 plus grand que le rectangle 39.

En figure 6, entre deux prises de vue, l'ensemble de la mire et du support a été translaté selon une direction orthogonale à l'axe 7. Les images des billes aux positions 32, 34, 36 et 38 dans la première radiographie sont décalées respectivement vers des positions 62, 64, 66 et 68 dans la radiographie courante. Les positions 62, 64, 66 et 68 définissent un rectangle 69. Par rapport au rectangle 39, le rectangle 69 est décalé dans la même direction que celle de la translation subie par le support.

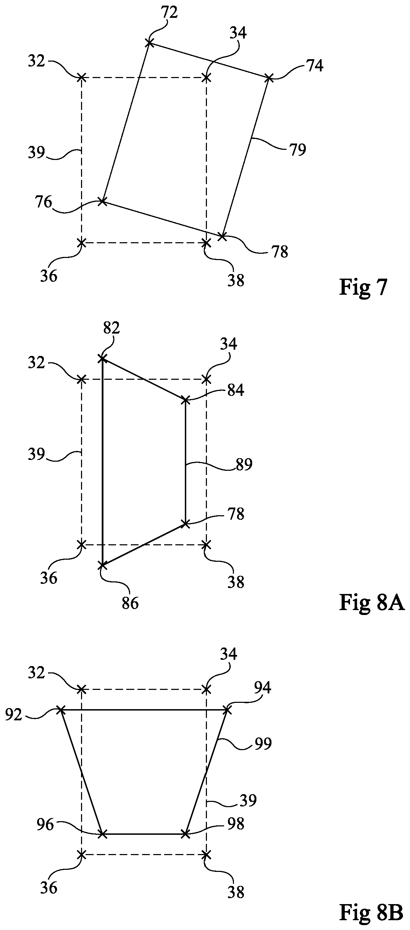

En figure 7, entre deux prises de vue, l'ensemble de la mire et du support a subi une rotation selon un axe parallèle à l'axe 7. Les images des billes aux positions 32, 34, 36 et 38 dans la première radiographie sont décalées respectivement vers des positions 72, 74, 76 et 78 dans la radiographie courante. Les positions 72, 74, 76 et 78 définissent un rectangle 79, ce rectangle étant l'image du rectangle 39 par la même rotation que celle subie par le support.

En figure 8A, entre deux prises de vue, l'ensemble de la mire et du support a subi une rotation selon un axe parallèle à l'axe 15. Les images des billes aux positions 32, 34, 36 et 38 dans la première radiographie sont décalées respectivement vers des positions 82, 84, 86 et 88 dans la radiographie courante. Les positions 82, 84, 86 et 88 définissent un trapèze 89 dont les bases sont parallèles aux côtés les plus longs du rectangle 39.

En figure 8B, entre deux prises de vue, l'ensemble de la mire et du support a subi une rotation selon un axe orthogonal aux axes 7 et 15. Les images des billes aux positions 32, 34, 36 et 38 dans la première radiographie sont décalées respectivement vers des positions 92, 94, 96 et 98 dans la radiographie courante. Les positions 92, 94, 96 et 98 définissent un trapèze 99 dont les bases sont parallèles aux côtés les plus courts du rectangle 39.

Les déplacements parasites de l'échantillon entre deux prises de vue peuvent être une combinaison des déplacements parasites simples (rotation, translation) décrits en relation avec chacune des figures 5A, 5B, 6, 7, 8A et 8B. Dans ce cas, les décalages des images des billes sont des combinaisons des décalages correspondant à chacun de ces déplacements parasites simples.

Le tomographe de la figure 2 détecte le décalage de l'image des billes dans chaque radiographie par rapport, par exemple, à une radiographie de référence telle que la première radiographie. Chaque décalage ainsi mesuré correspond à un déplacement parasite de l'échantillon provoquant des déformations de l'image de l'échantillon dans les radiographies. Un dispositif de traitement associé, par exemple, au détecteur corrige l'image de l'échantillon dans chaque radiographie pour compenser ces déformations provoquées par les déplacements parasites de l'échantillon. Cette correction est effectuée en tenant compte du fait que les positions des billes par rapport au support de l'échantillon sont insensibles à des variations de température.

La qualité de l'image tridimensionnelle de l'échantillon construite par le tomographe de la figure 2 à partir des radiographies ainsi corrigées n'est donc pas affectée par des déplacements parasites de l'échantillon.

On comprendra que les déformations de l'image de l'échantillon correspondant aux rotations décrites en relation avec les figures 8A et 8B ne peuvent pas être corrigées directement puisque l'épaisseur de l'échantillon traversé par le faisceau est modifiée par ces rotations. La détection de ces rotations parasites constitue néanmoins une information sur la qualité de l'image tridimensionnelle construite. En fonction de cette information, l'utilisateur peut réinitialiser une phase d'acquisition des radiographies ou peut mettre en oeuvre des options correctives adéquates disponibles dans certains logiciels de reconstruction d'image.

Des modes de réalisation particuliers ont été décrits. Diverses variantes et modifications apparaîtront à l'homme de l'art. En particulier, bien que l'on ait décrit en figures 3A et 3B un mode de réalisation d'une mire et que l'on ait décrit en figures 4A et 4B une variante de réalisation de cette mire, la forme et les matériaux de la mire peuvent être modifiés tant que les positions des billes par rapport au support 13 restent insensibles à des variations de température et tant que, dans les radiographies, les images des billes sont autour de l'image de l'échantillon.

Bien que, dans le tomographe de la figure 2, la mire soit disposée entre l'échantillon et le détecteur, celle-ci pourra être fixée au support de façon qu'elle soit disposée entre la source et l'échantillon.

Dans la description précédente, on a considéré des déplacements parasites de l'échantillon provoqués par une variation de température. La mire montée dans un tomographe comme cela est décrit en relation avec la figure 2 permet également de déterminer les déplacements parasites de l'échantillon provoqués par d'autres phénomènes qu'une variation de température.

## Revendications

1. Dispositif de détermination des déplacements parasites d'un échantillon (5) à analyser dans un appareil de tomographie à rayons X, le dispositif comprenant :
une source (1) émettant un faisceau (6) de rayons X vers un détecteur (3) ;
un support (13) sur lequel est montée une platine tournante (11), un porte-échantillon (9) disposé au centre de la platine tournante (11) étant configuré pour porter un échantillon à analyser de telle sorte qu'il soit traversé par le faisceau ;
un détecteur (3) ;
le dispositif étant **caractérisé par le fait qu'**il comprend en outre :
une mire (17) comprenant un cadre rectangulaire (19), quatre tiges (26), chaque tige (26) étant solidaire de l'un des coins du cadre rectangulaire (19) et étant dirigée vers l'intérieur du cadre rectangulaire (19), quatre billes (21) opaques aux rayons X, dont chacune est fixée à l'extrémité de l'une des tiges (26) par l'intermédiaire d'une bague (27), la mire (17) étant fixée audit support par un bras (23) solidaire de la partie médiane d'un montant du cadre rectangulaire (19), le cadre rectangulaire (19) et les quatre tiges (26) étant en un premier matériau et la bague (27) étant en un second matériau ayant un coefficient de dilation thermique supérieur à celui du premier matériau de sorte que, sur le détecteur, des images (25) des billes soient autour d'une image (16) de l'échantillon, la forme et les matériaux de la mire étant choisis pour que les positions des billes par rapport au support soient insensibles à des variations de température.

2. Dispositif selon la revendication 1, dans lequel le bras (23) est un barreau en le premier matériau.

3. Dispositif selon la revendication 1, dans lequel le bras (23) comprend, alignés selon un même axe (29) :
un tube supérieur (23C) ayant une extrémité fixée à ladite partie médiane et ayant une autre extrémité dont la paroi interne comprend une première partie filetée (30C) ;
un tube inférieur (23A) ayant une extrémité fixée au support (13) et ayant une autre extrémité dont la paroi externe comprend une deuxième partie filetée (30A) ; et
un tube intermédiaire (23B) ayant une paroi externe filetée liée à ladite première partie filetée (30C) et ayant une paroi interne filetée liée à ladite deuxième partie filetée (30A).

4. Dispositif selon la revendication 3, dans lequel le tube supérieur (23C) et le tube inférieur (23A) sont en le premier matériau et le tube intermédiaire (23B) est en le second matériau.

5. Dispositif selon la revendication 4, dans lequel la première partie filetée (30C) est plus éloignée du cadre (19) de la mire que la deuxième partie filetée (30A).

6. Dispositif selon l'une quelconque des revendications 1 à 5, dans lequel le premier matériau est de l'Invar, le deuxième matériau est de l'aluminium, et les billes (21) sont en acier.

7. Dispositif selon l'une quelconque des revendications 1 à 6, dans lequel la mire (17) est disposée entre l'échantillon (5) et le détecteur (3).

8. Dispositif selon l'une quelconque des revendications 1 à 7, comprenant en outre un dispositif de traitement pour corriger chaque image (16) de l'échantillon (5) à partir de l'image (25) des billes (21).

9. Dispositif selon l'une quelconque des revendications 1 à 8, dans lequel la source (1) et le détecteur (3) sont fixes et l'échantillon (5) est monté sur la platine tournante (11) reposant sur le support (13).

## Patentansprüche

1. Vorrichtung zum Bestimmen der parasitären Bewegungen einer zu analysierenden Probe (5) in einem Röntgenstrahl-Tomographiegerät, wobei die Vorrichtung umfasst:
eine Quelle (1), welche einen Röntgenstrahlenstrahl (6) in Richtung eines Detektors sendet (3);
einen Träger (13), auf welchem eine drehende Platte (11) angebracht ist, wobei ein Probenhalter (9), der in der Mitte der drehenden Platte (11) angeordnet ist, konfiguriert ist, um eine zu analysierende Probe derart zu halten, dass sie von dem Strahl durchquert wird;
einen Detektor (3),
wobei die Vorrichtung **dadurch gekennzeichnet ist, dass** sie ferner umfasst:
ein Prüfmuster (17), umfassend einen rechteckigen Rahmen (19), vier Stäbe (26), wobei jeder Stab (26) mit einer der Ecken des rechteckigen Rahmens (19) fest verbunden ist und in das Innere des rechteckigen Rahmens (19) gerichtet ist, vier für Röntgenstrahlen undurchlässige Kugeln (21), von denen jede an dem Ende von einer der Stangen (26) anhand eines Rings (27) befestigt ist, wobei das Prüfmuster (17) an dem Träger mittels eines Arms (23) befestigt ist, der mit dem mittleren Teil eines Pfostens des rechteckigen Rahmens (19) fest verbunden ist, wobei der rechteckige Rahmen (19) und die vier Stangen (26) aus einem ersten Material sind und der Ring (27) aus einem zweiten Material ist mit einem Wärmeausdehnungskoeffizienten, der höher ist als der des ersten Materials derart, dass auf dem Detektor Bilder (25) der Kugeln um ein Bild (16) der Probe sind, wobei die Form und die Materialien des Prüfmusters ausgewählt sind, damit die Positionen der Kugeln in Bezug auf den Träger gegenüber Temperaturschwankungen unempfindlich sind.

2. Vorrichtung nach Anspruch 1, wobei der Arm (23) ein Stab aus dem ersten Material ist.

3. Vorrichtung nach Anspruch 1, wobei der Arm (23) ausgerichtet in derselben Achse (29) umfasst:
ein oberes Rohr (23C) mit einem Ende, das an dem mittleren Teil befestigt ist und ein anderes Ende hat, dessen innere Wand einen ersten gewindeten Teil (30C) umfasst;
ein unteres Rohr (23A) mit einem Ende, das an dem Träger (13) befestigt ist und ein anderes Ende hat, dessen äußere Wand einen zweiten gewindeten Teil (30A) umfasst; und
ein Übergangsrohr (23B), das eine äußere gewindete Wand hat, die mit dem ersten gewindeten Teil (30C) verbunden ist und eine innere gewindete Wand hat, die mit dem zweiten gewindeten Teil (30A) verbunden ist.

4. Vorrichtung nach Anspruch 3, wobei das obere Rohr (23C) und das untere Rohr (23A) aus dem ersten Material sind und das Übergangsrohr (23B) aus dem zweiten Material ist.

5. Vorrichtung nach Anspruch 4, wobei der erste gewindete Teil (30C) weiter vom Rahmen (19) des Prüfmusters entfernt ist als der zweite gewindete Teil (30A).

6. Vorrichtung nach einem der Ansprüche 1 bis 5, wobei das erste Material Invar ist, das zweite Material Aluminium ist und die Kugeln (21) aus Stahl sind.

7. Vorrichtung nach einem der Ansprüche 1 bis 6, wobei das Prüfmuster (17) zwischen der Probe (5) und dem Detektor (3) angeordnet ist.

8. Vorrichtung nach einem der Ansprüche 1 bis 7, umfassend ferner eine Verarbeitungsvorrichtung, um jedes Bild (16) der Probe (5) auf der Basis des Bildes (25) der Kugeln (21) zu korrigieren.

9. Vorrichtung nach einem der Ansprüche 1 bis 8, wobei die Quelle (1) und der Detektor (3) fest sind und die Probe (5) auf der drehenden Platte (11) angebracht ist, die auf dem Träger (13) ruht.

## Claims

1. A device for determining parasite displacements of a sample (5) to be analyzed within a X-ray tomography apparatus, the device comprising:
a source (1) emitting a beam (6) of X rays to a detector (3);
a holder (13) on which a rotating stage (11) is mounted, a sample holder (9) arranged in the middle of the rotating stage (11) being configured to carry a sample to be analyzed such that it is crossed by the beam;
a detector (3);
the device being **characterized in that** it further comprises:
a target (17) comprising a rectangular frame (19), four rods (26), each rod (26) being integral with one of the corners of the rectangular frame (19) and being directed to the interior of the rectangular frame (19), four X-ray opaque balls (21), each ball being attached to the end of one of the rods (26) via a ring (27), the target (17) being attached to said holder through an arm (23) integral with the median part of a post of the rectangular frame (19), the rectangular frame (19) and the four rods (26) being made of a first material and the ring (27) being made of a second material having a thermal expansion coefficient higher than that of the first material such that, on the detector, images (25) of the balls are located around an image (16) of the sample, the shape and the materials of the target being selected such that the positions of the balls with respect to the holder are impervious to temperature variations.

2. The device according to claim 1, wherein the arm (23) is a bar made of the first material.

3. The device according to claim 1, wherein the arm (23) comprises, aligned along a same axis (29):
an upper tube (23C) having one end attached to said median part and having another end whose inner wall has a first threaded part (30C);
a lower tube (23A) having one end attached to the holder (13) and having another end whose outer wall has a second threaded part (30A);
an intermediary tube (23B) having a threaded outer wall joined to said first threaded part (30C) and having a threaded inner wall joined to said second threaded part (30A).

4. The device according to claim 3, wherein the upper tube (23C) and the lower tube (23A) are made of the first material and the intermediary tube (23B) is made of the second material.

5. The device according to claim 4, wherein the first threaded part (30C) is further away from the frame (19) of the target than the second threaded part (30A).

6. The device according to any of claims 1-5, wherein the first material is Invar, the second material is aluminum, and the balls (21) are made of steel.

7. The device according to any of claims 1-6, wherein the target (17) is disposed between the sample (5) and the detector (3).

8. The device according to any of claims 1-7, further comprising a processing device for correcting each image (16) of the sample (5) from the image (25) of the balls (21) .

9. The device according to any of claims 1-8, wherein the source (1) and the detector (3) are fixed and the sample (5) is mounted on the rotating stage (11) located on the holder (13).
